# EUROPEAN PATENT APPLICATION

(11) **EP 3 031 944 A1**
(43) Date of publication of application: **15.06.2016**
(21) Application number: 14834310.6
(22) Date of filing: 13.05.2014
(51) Int. Cl.: C23C 4/04, C23C 4/10

(54) **SLURRY FOR THERMAL SPRAYING**

(30) Priority: 08.08.2013 JP 2013165014
(71) Applicant: Nippon Yttrium Co., Ltd., Omuta-shi, Fukuoka 836-0003 (JP)
(72) Inventor: SATO, Ryuichi, Omuta-shi Fukuoka 836-0003 (JP); FUKAGAWA, Naoki, Omuta-shi Fukuoka 836-0003 (JP); SHIGEYOSHI, Yuji, Omuta-shi Fukuoka 836-0003 (JP)
(74) Representative: Forstmeyer, Dietmar
(86) International application number: PCT/JP2014/062671
(87) International publication number: WO 2015/019673

(57) **Abstract**

A slurry for thermal spraying comprising particles containing a rare earth oxyfluoride and a dispersing medium. The particles have an average particle size of 0.01 to 10 µm. The particles may further contain a rare earth fluoride. When the particles are analyzed by X-ray diffractometry using or CuKα1 radiation, a ratio of the maximum peak intensity (SO) of a rare earth oxide observed in a range of 2θ angles of from 20° to 40° to the maximum peak intensity (S1) of the rare earth oxyfluoride observed in the same range, S0/S1, is preferably 0.10 or less.

## Description

### Technical Field

This invention relates to a slurry for thermal spraying containing a rare earth element.

### Background Art

A halogen gas is used in an etching step in the fabrication of semiconductor devices. In order to prevent halogen gas corrosion of an etching apparatus, the inner side of the etching apparatus is generally protected by a thermal spray coating made of a highly anti-corrosive substance. Materials containing a rare earth element are often used as one type of such substances.

Because powder is difficult to be thermally sprayed as it is, it is practiced to granulate the powder into granules with good flowability. In order to use particles as it is for thermal spray, it has been studied to make a slurry containing the particles.

Known slurries containing a rare earth element for thermal spraying include a slurry including yttrium oxide particles having an average particle size of 6 µm or smaller and an yttrium oxide purity of 95% or higher and a dispersing medium, the yttrium oxide content of the slurry ranging from 1.5 to 30 vol% (see Patent Literature 1).

A thermal spray material, although which is not a slurry, is known, including granules granulated from a rare earth fluoride with an average primary particle size of 10 µm or less, the granules having an aspect ratio of 2 or smaller, an average particle size of 20 to 200 µm, and a degree of volume reduction of 30% or less (see Patent Literature 2). The thermal spray material of Patent Literature 2 is produced by granulating a rare earth fluoride together with a binder using a spray dryer and firing the granules at 600°C or lower. Patent Literature 2 says in para. [0014] that if the firing temperature exceeds 600°C, an apparent weight loss results, indicating the occurrence of oxidative decomposition and, therefore, the firing for removing the binder should be carried out at or below 600°C. Patent Literature 2 describes that the firing temperature should be 600°C or lower so as not to cause the rare earth fluoride to oxidatively decompose to produce an oxyfluoride of the rare earth element.

The thermal spray coating obtained using the slurry of Patent Literature 1 is a coating of yttrium oxide (a rare earth element oxide) and has the problem of poor resistance to corrosion by chlorine-based plasma. The thermal spray coating obtained using the thermal spray material according to Patent Literature 2, which includes a rare earth fluoride, tends to have an increased oxygen amount with the progress of plasma etching and therefore has unstable characteristics. In addition, because the coating is liable to have low density and non-uniformity, it tends to generate particles during plasma etching.

### Citation List

### Patent Literature

Patent Literature 1: JP 2010-150617A
Patent Literature 2: JP 2002-115040A

### Summary of Invention

### Technical Problem

Accordingly, an object of the invention is to provide a slurry for thermal spraying which is free from various problems associated with the conventional techniques.

### Solution to Problem

As a result of extensive investigation, the inventors have surprisingly found that a slurry of particles containing an oxyfluoride of a rare earth element and having a specific particle size gives a dense and uniform thermal spray coating and that the coating exhibits very good resistance to corrosion by both fluorine based plasma and chlorine based plasma. The invention has been completed based on these findings.

The invention provides a slurry for thermal spraying including particles containing a rare earth element oxyfluoride (LnOF) and a dispersing medium, the particles having an average particle size of 0.01 µm to 10 µm.

### Advantageous Effects of Invention

The slurry for thermal spraying of the invention forms, by thermal spraying, a dense and uniform thermal spray coating that has high resistance to corrosion by not only fluorine based plasma but chlorine based plasma and is less likely to generate particles during plasma etching.

### Description of Embodiments

The invention will be described based on its preferred embodiments. One of the characteristics of the slurry for thermal spraying of the invention is that the slurry including particles containing a rare earth oxyfluoride (LnOF). The rare earth oxyfluoride (LnOF) used in the invention is a compound consisting of a rare earth element (Ln), oxygen (O), and fluorine (F). The LnOF may be a compound having an Ln:O:F molar ratio of 1:1:1. Instead, the LnOF may be a compound having an Ln:O:F molar ratio other than 1:1:1. For example, when Ln = Y, examples of the LnOF include Y₅O₄F₇, Y₇O₆F₉, and Y₄O₆F₉ as well as YOF. The LnOF may be a single compound or a mixture of two or more of these oxyfluorides.

The LnOF-containing particles of the slurry for thermal spraying of the invention have an average particle size of 0.01 to 10 µm. In the invention, since LnOF-containing particles have an average particle size of 0.01 µm or greater, the particles are producible. Further, the particles has an average particle size of 10 µm or smaller, the particles are capable of forming a dense and uniform thermal spray coating. From these viewpoints, the LnOF-containing particles preferably have an average particle size of 0.02 to 8 µm, more preferably 0.05 to 6 µm. As used herein, the term "average particle size" as for the LnOF-containing particles means a diameter at 50% cumulative volume in the particle size distribution (hereinafter "D50"). D50 of 0.2 µm or greater may be measured by a laser diffraction scattering method, specifically by the method described infra. D50 smaller than 0.2 µm may be measured by a dynamic light scattering method, specifically by the method described infra. Wichever the laser diffraction scattering method or the dynamic light scattering method is adopted, the particles are treated by ultrasonication at an output power of 300 W for 5 minutes before the particle size distribution analysis. Particles having the average particle size falling within the above range can be obtained by properly selecting the grinding conditions of Step 2 in the process for producing the slurry for thermal spraying.

Rare earth elements (Ln) include 16 elements: scandium (Sc), yttrium (Y), lanthanum (La), cerium (Ce), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), and lutetium (Lu). The slurry for thermal spraying of the invention contains at least one of these 16 rare earth elements. To further ensure the heat resistance of the slurry for thermal spraying, wear resistance, and corrosion resistance, it is preferred to use at least one of yttrium (Y), samarium (Sm), gadolinium (Gd), dysprosium (Dy), erbium (Er), and ytterbium (Yb), and particularly to use yttrium (Y).

The LnOF-containing particles may further contain a rare earth element fluoride (LnF₃).

Although it is preferred that the LnOF-containing particles for use in the invention be composed solely of LnOF taking the ability to form a uniform thermal spray coating and anticorrosion of a thermal spray coating to oxygen radicals into consideration, the particles may contain LnF₃ in addition to LnOF within a range that does not impair the effect of the invention. The ratio of LnF₃ to LnOF in the particles is adjustable by the firing conditions in Step 1 of the hereinafter described process for producing the slurry. It is not easy to accurately determine the amount of fluorine present in the slurry for thermal spraying of the invention. Then, in the invention, the X-ray diffraction pattern of the particles of the slurry for thermal spraying is analyzed and the LnF₃ content is estimated from the relative intensity of the main peak of LnF₃ relative to the intensity of the main peak of LnOF. In detail, the particles are analyzed by X-ray diffractometry using Cu-Kα or Cu-Kα1 radiation. A ratio of the maximum peak intensity (S1) assigned to LnOF in a 2θ angle range of from 20° to 40° to the maximum peak intensity (S2) assigned to LnF₃ in a 26 angle range of from 20° to 40, S1/S2, is obtained. When S1/S2 is, for example, 0.005 or greater, the resulting thermal spray coating tends to be dense and uniform, and be prevented from generating particles during plasma etching more certainly. From this viewpoint, S1/S2 is more preferably 0.01 or greater.

In the case where the LnOF-containing particles contain a rare earth fluoride (LnF₃), the rare earth element (Ln) of the rare earth fluoride (LnF₃) is usually the same as that of the rare earth oxyfluoride (LnOF) but may be different therefrom.

The LnOF-containing particles of the slurry for thermal spraying of the invention contains oxygen of LnOF origin. The oxygen content in the particles is preferably in the range of from 0.3 mass% to 14 mass%, more preferably 0.4 mass% to 13 mass%, even more preferably 0.5 mass% to 11 mass%. With an oxygen content in that range, the resulting thermal spray coating exhibits further improved anti-corrosive properties to chlorine based plasma and is prevented from generating particles more certainly. When the rare earth element (Ln) is Y, the oxygen content in the LnOF-containing particles preferably falls within the above range. When the rare earth element (Ln) is La, Ce, Pr, Nd, Sm, Eu, or Gd, the oxygen content of the LnOF-containing particles is preferably 0.3 mass% to 10 mass%, more preferably 0.4 mass% to 9 mass%, even more preferably 0.4 mass% to 8 mass%. When the rare earth element (Ln) is Tb, Dy, Ho, Er, Tm, Yb, or Lu, the oxygen content of the LnOF-containing particles is preferably 0.3 mass% to 9 mass%, more preferably 0.4 mass% to 8 mass%, even more preferably 0.5 mass% to 7 mass%. When the rare earth element (Ln) is Sc, the oxygen content in the LnOF-containing particles is preferably 0.3 mass% to 22 mass%, more preferably 0.4 mass% to 18 mass%, even more preferably 0.5 mass% to 15 mass%. The oxygen content in the LnOF-containing particles is adjustable to the above ranges by proper selection of the conditions of firing LnF₃ in an oxygen-containing atmosphere in the hereinafter described process of producing the slurry for thermal spraying of the invention.

The oxygen content in the LnOF-containing particles of the slurry for thermal spraying is determined by, for example, a following process.

The slurry is dried at 110°C for 12 hours in a hot air dryer of forced exhaustion type free from explosion hazard to remove the dispersing medium and the oxygen content of the residual solid is measured using an oxygen/nitrogen analyzer EMGA-920 available from Horiba, Ltd.

While, as stated above, the LnOF-containing particles of the slurry for thermal spraying of the invention may further contain LnF₃ in addition to LnOF, it is preferred for the particles to contain the least amount of Ln₂O₃, an oxide of a rare earth element Ln, in terms of corrosion resistance of the thermal spray coating, especially resistance to corrosion by chlorine-containing gas. The Ln₂O₃ content in the LnOF-containing particles can be minimized by properly selecting the conditions of firing LnF₃ in an oxygen-containing atmosphere in Step 1 of the hereinafter described process for producing the slurry for thermal spraying.

Because it is not easy to quantitatively determine the Ln₂O₃ content of the particles of the slurry for thermal spraying of the invention by chemical analyses, in the invention, the Ln₂O₃ content is estimated from the intensity of a diffraction peak in X-ray diffractometry of the particles left after removing the dispersing medium from the slurry for thermal spraying. In detail, the particles are analyzed by X-ray diffractometry using CuKα or CuKα1 radiation. A ratio of the maximum peak intensity (S0) of a rare earth oxide observed in a range of 2θ angles of from 20° to 40° to the maximum peak intensity (S1) of a rare earth oxyfluoride observed in a range of 2θ angles of from 20° to 40°, S0/S1, is obtained. The S0/S1 is preferably 0.10 or less, more preferably 0.05 or less, even more preferably 0.01 or less. The S0/S1 may be zero. The maximum diffraction peak assigned to, e.g., yttrium oxide (Y₂O₃) usually appears at a 2θ angle of around 29.1°.

In the case where the LnOF-containing particles contain a rare earth oxide (Ln₂O₃ the rare earth element (Ln) of the rare earth oxide (Ln₂O₃) is usually the same as that of the rare earth oxyfluoride (LnOF) but may be different therefrom.

The LnOF-containing particles of the slurry for thermal spraying of the invention preferably have a BET specific surface area of 0.4m²/g to 150 m²/g, more preferably 1 m²/g to 150 m²/g, even more preferably 1.2m²/g to 100 m²/g, still even more preferably 1.5m²/g to 50 m²/g. With the particles' BET specific surface area in that range, the slurry easily forms a dense and uniform thermal spray coating, which is prevented from generating dust particles more certainly. The BET specific surface area of the particles is measured by the hereinafter described method.

The dispersing medium of the slurry for thermal spraying of the invention may be one of, or a combination of two or more of, water and various organic solvents. An organic solvent having a water solubility of 5 mass% or more or a mixture of such an organic solvent and water is particularly preferred in terms of forming a dense and uniform thermal spray coating which hardly generates particles. The organic solvent having a water solubility of 5 mass% or more may be a freely water-miscible organic solvent. The mixture of the organic solvent having a water solubility of 5 mass% or more and water preferably has an organic solvent to water ratio within the water solubility limit of the organic solvent. From the standpoint of the dispersibility of the LnOF-containing particles, the proportion of the organic solvent having a water solubility of 5 mass% or more in the dispersing medium is preferably 5 mass% or more, more preferably 10 mass% or more, even more preferably 15 mass% or more.

Examples of the organic solvent having a water solubility of 5 mass% or more (including a freely water-miscible one) include alcohols, ketones, cyclic ethers, formamides, and sulfoxides.

Examples of the alcohols include monohydric alcohols, such as methanol (methyl alcohol), ethanol (ethyl alcohol), 1-propanol (n-propyl alcohol), 2-propanol (isopropyl alcohol, IPA), 2-methyl-1-propanol (isobutyl alcohol), 2-methyl-2-propanol (tert-butyl alcohol), 1-butanol (n-butyl alcohol), and 2-butanol (sec-butyl alcohol); and polyhydric alcohols, such as 1,2-ethanediol (ethylene glycol), 1,2-propanediol (propylene glycol), 1,3-propanediol (trimethylene glycol), and 1,2,3-propanetriol (glycerol).

Examples of ketones for use in the invention are propanone (acetone) and 2-butanone (methyl ethyl ketone, MEK). Examples of the cyclic ethers are tetrahydrofuran (THF) and 1,4-dioxane. Examples of the formamides include N,N-dimethylformamide (DMF). Examples of the sulfoxides include dimethyl sulfoxide (DMSO). These organic solvents may be used either individually or as a mixture thereof.

Preferred of the organic solvents having a water solubility of 5 mass% or more are alcohols. Monohydric alcohols are more preferred, with at least one of methanol, ethanol, and 2-propanol being particularly preferred.

The concentration of the LnOF-containing particles in the slurry for thermal spraying of the invention is preferably 1 mass% to 80 mass%, more preferably 2 mass% to 75 mass%, even more preferably 3 mass% to 70 mass%.

Particularly, when the slurry for thermal spraying is actually used for thermal spraying, the concentration of the particles in the slurry is preferably 1 mass% to 50 mass%, more preferably 2 mass% to 45 mass%, even more preferably 3 mass% to 40 mass%. With the particles concentration being in that range, the spraying speed is easy to control within a proper range thereby to form a coating with good uniformity. Taking transportation and storage of the slurry into consideration, the particles concentration in the slurry during the stage of production of the slurry is preferably 10 mass% to 80 mass%, more preferably 15 mass% to 75 mass%, even more preferably 20 mass% to 70 mass%. When the particles concentration of the slurry to be subjected to thermal spraying is different from that of the slurry at the time of production, the slurry is diluted with the dispersing medium or otherwise adjusted to have a desired particles concentration on use.

The slurry for thermal spraying of the invention may contain components other than the LnOF-containing particles and the dispersing medium, such as pH adjustors, dispersants, viscosity modifiers, and bactericides, as appropriate within ranges that do not ruin the effect of the invention. The solid matter of the slurry for thermal spraying of the invention may comprise particles other than the LnOF-containing particles but is preferably composed solely of the LnOF-containing particles in terms of forming a dense and uniform thermal spray coating.

Containing LnOF-containing particles with a specific particle size, the slurry for thermal spraying of the invention is capable of providing a dense and uniform thermal spray coating. The coating has an advantage of high corrosion resistance to chlorine based plasma as compared with a coating obtained by using a rare earth element oxide (Ln₂O₃), e.g., Y₂O₃, that has conventionally been proposed as a rare earth element-based thermal spray material. The slurry of the invention is also advantageous over the use of LnOF-free rare earth element fluoride (LnF₃) that has conventionally been proposed as a rare earth element-based thermal spray material in that the slurry of the invention provides a dense and uniform thermal spray coating that generates markedly reduced amount of particles.

A suitable process for producing the slurry for thermal spraying of the invention will then be described. The process is roughly divided into the following two steps. Each steps will be illustrated in greater detail.
Step 1: firing a rare earth fluoride (LnF₃) in an oxygen-containing atmosphere at 750° to 1130°C to obtain a fired product containing a rare earth oxyfluoride (LnOF).
Step 2: mixing the fired product as obtained in Step 1 or after being dry-ground with a dispersing medium, and wet grinding the mixture.

The slurry for thermal spraying of the invention may be produced otherwise than as described herein. For example, a rare earth oxyfluoride (LnOF) is prepared in ways other than that of Step 1, and is wet-ground to make a slurry.

### Step 1:

In Step 1, a rare earth (Ln) fluoride (LnF₃) is used as a raw material.

The rare earth (Ln) fluoride is a fluoride of at least one of the above enumerated 16 elements.

The rare earth fluoride (LnF₃) can be synthesized through various methods. A wet synthesis process is preferred to obtain a uniform, high-purity product with ease. For example, the rare earth fluoride (LnF₃) is synthesized by mixing a solution, where an acid-soluble compound of a rare earth element, such as an oxide, carbonate, or hydroxide of a rare earth element, is dissolved in nitric acid or hydrochloric acid, or a solution, where a water-soluble compound of a rare earth element, such as a nitrate or chloride of a rare earth element, is dissolved in water or a water/acid mixed solvent, with a fluorine-containing water-soluble compound, such as hydrofluoric acid or ammonium fluoride, to form a precipitate of a fluoride of the rare earth element (LnF₃), washing and filtering the precipitate, and drying the filter cake. In another method, the LnF₃ is obtained by suspending a carbonate, oxalate, hydroxide, oxide, etc. of a rare earth element in water to obtain a slurry, adding a fluorine-containing water-soluble compound to the resulting slurry to form a precipitate of a fluoride of the rare earth element (LnF₃), which is then washed, filtered, and dried.

In Step 1, the rare earth fluoride (LnF₃) is fired to produce a rare earth oxyfluoride (LnOF). The degree of producing an oxyfluoride of the rare earth element is controllable as appropriate by the firing conditions described below. Generally speaking, by raising the firing temperature or extending the firing time, the degree of producing an LnOF increases while decreasing the residue of the rare earth fluoride (LnF₃). As the firing temperature is further raised or the firing time is further extended, a rare earth oxide (Ln₂O₃) and the like start to be by-produced.

The rare earth fluoride (LnF₃) firing temperature in Step 1 is preferably 750° to 1130°C. By setting a firing temperature at 750°C or higher, the LnOF-containing particles has a sufficiently high oxygen content, and the rare earth oxyfluoride (LnOF) contained in the particles is sufficiently formed. By setting a firing temperature at 1130°C or lower, excessive formation of an oxide of the rare earth element (Ln₂O₃) is suppressed. Excessive formation of Ln₂O₃ should be minimized to avoid reduction of anti-corrosive properties of the resulting thermal spray coating. From these viewpoints, the rare earth fluoride (LnF₃) firing temperature is more preferably 750° to 1100°C, even more preferably 800° to 1050°C, still even more preferably 850° to 1000°C.

Provided that the firing temperature is in the range recited above, the firing time is preferably 1 to 48 hours, more preferably 2 to 36 hours, to sufficiently form the rare earth oxyfluoride (LnOF) while suppressing excessive formation of Ln₂O₃.

The firing atmosphere is desirably an oxygen-containing atmosphere to form LnOF from LnF₃ which is a raw material. Air is used as an oxygen-containing atmosphere for convenience due to the lack of the need for atmosphere adjustment.

Thus, a fired product containing the rare earth oxyfluoride (LnOF) is obtained in Step 1.

If necessary, the fired product containing the rare earth oxyfluoride (LnOF) as obtained in Step 1 may be dry-ground before being subjected to Step 2 to obtain ground products, and, then, the obtained ground products may be wet-ground in Step 2. When, in particular, the LnOF-containing firing product as obtained in Step 1 contains lumps, it is preferably dry-ground by means of a crusher, such as a jaw crusher or roller crusher. If desired, the ground product obtained by grinding the lumpy fired product or the lump-free fired product may be directly dry-ground in a dry ball mill, a hammer mill, a jet mill, and the like.

### Step 2:

In step 2 the fired product as obtained in step 1 or after being dry-ground is mixed with a dispersing medium and wet-ground.

The dispersing medium that can be used in Step 2 may be chosen from those listed supra as examples of the dispersing medium of the slurry for thermal spraying of the invention. The dispersing medium used in Step 2 is preferably the same as that of the slurry for thermal spraying prepared in Step 2 but in some cases may be different therefrom. For instance, in the case where the slurry for thermal spraying contains a 1:1 by mass mixture of water and ethanol as a dispersing medium, the dispersing medium to be used in an initial stage of the wet grinding may be ethanol alone or a mixture of ethanol and water in other than the 1:1 by mass mixing ratio. In that case, the composition of the dispersing medium is adjusted to a desired final composition during or after the wet grinding. The amount of the dispersing medium to be used from the start of wet grinding in Step 2 may be equal to an amount that gives a desired particles concentration of the final product or may be less than that amount. In the latter case, an additional amount of the dispersing medium may be added during or after the wet grinding to result in a final desired particles concentration.

The wet grinding machine that can be used in Step 2 is not particularly limited as long as it is capable of wet grinding. Preferred are grinding machines using grinding media, such as a vibration mill, ball mill, bead mill, and Attritor®. Useful grinding media may have various shapes, such as spherical and cylindrical, but spherical grinding media are preferable. Materials of the grinding media include zirconia, alumina, silicon nitride, silicon carbide, tungsten carbide, wear resistant steel, and stainless steel. Zirconia, alumina, silicon nitride, silicon carbide, and tungsten carbide are suitable. The diameter of the grinding media is preferably 0.03 mm to 10 mm, more preferably 0.05 mm to 5 mm, even more preferably 0.1 mm to 3 mm.

The wet grinding may be carried out in a single stage or two or even more stages. In the case that the wet grinding is carried out in two or even more stages, the two or more stages of grinding may be performed either by using or not using grinding media or by combining wet grinding using grinding media and wet grinding using no grinding media. For example, when wet grinding using grinding media is carried out in two or more stages, it is preferred that the grinding media used in the second and subsequent stages be smaller in size than those used in the preceding stage. The reason for that preference is as follows. In order to finely grind the particles in the slurry, it is efficient to use small grinding media. However, large particles are difficult to reduce in size with small-diameter grinding media. Therefore, it is advisable that the grinding be started with large grinding media and, after large particles disappear, the particles be then ground with smaller grinding media. In the case that the grinding is carried out in two or even more stages, two-stage grinding is preferred to three or more stage grinding in view of cost and effort. When, in Step 2, wet grinding using grinding media is conducted in a single stage, the diameter of the grinding media to be used is preferably 0.2 mm to 15 mm, more preferably 0.4 mm to 10 mm. When wet grinding using grinding media is performed in two stages, the diameter of the grinding media to be used in the first stage is preferably 0.4 mm to 15 mm, more preferably 0.8 mm to 10 mm, and that of the grinding media to be used in the second stage is preferably smaller than that in the first stage and is preferably 0.03 mm to 5 mm, more preferably 0.05 mm to 3 mm. The degree of size reduction of the fired product achieved in Step 2 is controlled based on the D50 measured using a laser diffraction scattering particle size distribution analyzer and/or the harmonic mean diameter measured using a dynamic light scattering particle size distribution analyzer. In the case when the grinding in Step 2 is carried out in two stages, the degree of size reduction in the first stage may be controlled based on the D50 measured using a laser diffraction scattering particle size distribution analyzer, and the degree of size reduction in the second stage may be controlled based on the harmonic mean diameter measured using a dynamic light scattering particle size distribution analyzer. From the viewpoint of cost and effort, the grinding time is preferably 0.5 to 72 hours, more preferably 1 to 48 hours, in the case of continuous operation. In the case of pass operation, the number of passes is preferably 1 to 30, more preferably 2 to 20. The systems for continuous operation include a system in which the whole amount of the slurry is put into an apparatus as with the case of using a ball mill and a recirculation system in which the slurry is fed from an external circulation tank to an apparatus and returned to the external circulation tank in a continuous manner as with the case of using a bead mill. The pass operation system is adopted by a bead mill and the like, in which a slurry having passed through an apparatus is directly fed to the same apparatus for the next pass. The pass operation method may be applied to continuous operation by using a series of bead mills for a few passes of the slurry.

The thus obtained slurry for thermal spraying is suitably used for various thermal spray techniques, such as plasma spraying. When the slurry is used for flame spraying, such as high velocity flame spraying, dispersing media in which the LnOF-containing particles are to be dispersed include not only alcohols such as ethanol but kerosene, diesel fuel, and the like. Substrates onto which thermal spray is applied include various metals such as aluminum, various alloys such as aluminum alloys, various ceramics such as alumina, quartz, and so forth.

### Examples

The invention will now be illustrated in greater detail with reference to Examples, but it should be understood that the invention is not construed as being limited thereto. Unless otherwise noted, all the percents are by mass.

### Example 1

A slurry for thermal spraying having particles containing a rare earth oxyfluoride was prepared according to the following procedures (a) and (b).

### (a) Step 1

### (a-1) Wet synthesis of yttrium fluoride

In 400 L of pure water being stirred was poured 300 kg of 99.9% yttrium oxide to prepare a slurry. To the slurry was added 550 L of a 15 mol/L aqueous solution of nitric acid at a rate of 5 L/min, and the stirring was further continued for 30 minutes. The slurry was filtered in vacuo to give 1100 L of a solution containing 270 g (in terms of Y₂O₃) of a solute per liter.

To the solution being stirred was added 300 L of 50% hydrofluoric acid at a rate of 5 L/min to form a precipitate of yttrium fluoride. Sedimentation of the precipitate, removal of the supernatant, addition of pure water, and repulping were conducted twice, followed by sedimentation, and followed by removal of the supernatant to obtain a wet solid. The resulting wet solid was placed in a polytetrafluoroethylene tray and dried at 150°C for 48 hours. The dried solid was ground to give yttrium fluoride. An X-ray diffractogram of the thus obtained yttrium fluoride showed only the diffraction peaks assigned to YF₃ with no peaks of yttrium oxyfluoride.

### (a-2) Firing of yttrium fluoride

The yttrium fluoride obtained in (a-1) was put in an alumina container and fired in the atmosphere in an electric oven at the firing temperature for the firing time shown in Table 1 below.

### (b) Step 2

The fired product obtained in Step 1 was put in a synthetic resin ball mill jar together with the dispersing medium shown in Table 1 and zirconia balls (grinding media), and was wet-ground in a continuous operation system. The diameter of the zirconia balls and the grinding time were as shown in Table 1. At the time of feeding the fired product, the particles concentration was adjusted so that the resulting slurry for thermal spraying might have the concentration shown in Table 3. In such a way, a desired slurry for thermal spraying is obtained.

### Examples 2 to 11 and Comparative Example 1

Slurries for thermal spraying were obtained in the same manner as in Example 1, except that the firing of yttrium fluoride in Step 1 was carried out under the conditions shown in Table 1.

### Comparative Example 2

A slurry for thermal spraying containing yttrium oxide particles was prepared by firing commercially available yttrium oxide in the same manner as in Step 2 of Example 1.

### Examples 12 to 15 and Comparative Example 3

The procedure of Example 10 was repeated, except for changing the time of wet grinding using the ball mill in Step 2.

### Examples 16 to 20

The procedure of Example 10 was repeated, except that the wet grinding was performed in two stages as follows. The first stage was carried out by wet grinding using the same ball mill as used in Example 10. In the second stage, the slurry from the first stage was put and ground in a bead mill (Picomill from Asada Tekko Co., Ltd.) by multi-pass operation. In Examples 18 to 20, the time of the first stage grinding using the ball mill was also changed as shown in Table 1. The second stage grinding using the bead mill was carried out using zirconia beads the diameter of which is shown in Table 1. The number of passes through the bead mill is shown in Table 1.

### Examples 21 to 29

The procedure of Example 10 was repeated, except for changing the dispersing medium used in the wet grinding of Step 2 as described in Table 1. In Examples 26 to 28, a 1:1 by mass mixture of the organic solvent shown in Table 1 and water was used.

### Examples 30 to 35

The procedure of Example 10 was repeated, except that the particles concentration of the slurry for thermal spraying was changed as shown in Table 3 by the concentration adjustment in Step 2.

### Example 36

Example 36 demonstrates the production of a slurry for thermal spraying having particles containing a rare earth element other than yttrium.

### (a): Step 1

### (a-1) Wet synthesis of samarium fluoride

Samarium oxide was used in place of the yttrium oxide used in Step 1 of Example 1. The amount of samarium oxide used was as shown in Table 2. The samarium oxide was poured into 40 L of pure water being stirred to prepare a slurry. To the slurry was added 55 L of a 15 mol/L aqueous solution of nitric acid at a rate of 5 L/min. After completion of the addition, the stirring was continued for 30 minutes. To the resulting solution being stirred was added 30 L of 50% hydrofluoric acid at a rate of 5 L/min to form a precipitate. Sedimentation of the precipitate, removal of the supernatant, addition of pure water, and repulping were conducted twice, followed by sedimentation, and followed by removal of the supernatant to obtain a wet solid. The resulting wet solid was placed in a polytetrafluoroethylene tray and dried at 150°C for 48 hours. The dried solid was ground to give samarium fluoride.

### (a-2) Firing of samarium fluoride

The fluoride obtained in (a-1) was put in an alumina container and fired in the atmosphere in an electric oven at the firing temperature for the firing time shown in Table 1 below.

### (b): Step 2

Steps 2 was carried out in the same manner as in Example 1 to yield a desired slurry for thermal spraying.

### Examples 37 to 41

Similarly to Example 36, Examples 37 to 41 demonstrate the production of slurries for thermal spraying containing a rare earth element other than yttrium. A desired slurry for thermal spraying was produced in the same manner as in Example 36, except for replacing samarium oxide used in Step 1 with the rare earth element oxide shown in Table 2 in the amount shown. In Example 41, the molar fraction of ytterbium oxide to the total amount of yttrium oxide and ytterbium oxide was 0.1.

**Table 1**

| | Firing (Step 1) | | Wet Grinding (Step 2) | | | | |
|---|---|---|---|---|---|---|---|
| | Temp. (°C) | Time (hr) | 1st Stage | | 2nd Stage | | Dispersing Medium |
| | | | Media Diameter (mm) | Time (hr) | Media Diameter (mm) | Time (hr) | |
| Example 1 | 750 | | | | | | ethanol |
| Example 2 | 800 | | | | | | ethanol |
| Example 3 | 850 | | | | | | ethanol |
| Example 4 | 900 | | | | | | ethanol |
| Example 5 | 950 | | | | | | ethanol |
| Example 6 | 1000 | 12 | | | | | ethanol |
| Example 7 | 1050 | | | | | | ethanol |
| Example 8 | 1075 | | 3 | 12 | - | - | ethanol |
| Example 9 | 1100 | | | | | | ethanol |
| Example 10 | 1125 | | | | | | ethanol |
| Example 11 | 1125 | 24 | | | | | ethanol |
| Compara. Example 1 | 700 | 12 | | | | | ethanol |
| Compara. Example 2 | commercial product (Y₂O₃) | | | | | | ethanol |
| Example 12 | | | | 2 | - | - | ethanol |
| Example 13 | | | | 4 | | | ethanol |
| Example 14 | | | | 6 | | | ethanol |
| Example 15 | | | | 24 | | | ethanol |
| Example 16 | 1125 | 12 | 3 | 12 | 0.1 | 10 | ethanol |
| Example 17 | | | | | | 20 | ethanol |
| Example 18 | | | | 24 | 0.05 | 10 | ethanol |
| Example 19 | | | | | | 20 | ethanol |
| Example 20 | | | | | | 30 | ethanol |
| Compara. Example 3 | | | | 1 | - | - | ethanol |
| Example 21 | | | | | | | methanol |
| Example 22 | | | | | | | IPA |
| Example 23 | | | | | | | THF |
| Example 24 | | | | | | | DMF |
| Example 25 | | | | | | | DMSO |
| Example 26 | 1125 | 12 | | | | | ethanol+ water |
| Example 27 | | | | | | | methanol+ water |
| Example 28 | | | | | | | IPA+water |
| Example 29 | | | 3 | | | | water |
| Example 30 | | | | 12 | - | - | ethanol |
| Example 31 | | | | | | | ethanol |
| Example 32 | | | | | | | ethanol |
| Example 33 | | | | | | | ethanol |
| Example 34 | | | | | | | ethanol |
| Example 35 | | | | | | | ethanol |
| Example 36 | | | | | | | ethanol |
| Example 37 | | | | | | | ethanol |
| Example 38 | 900 | 12 | | | | | ethanol |
| Example 39 | | | | | | | ethanol |
| Example 40 | | | | | | | ethanol |
| Example 41 | | | | | | | ethanol |

**Table 2**

| | Rare Earth Element Ln | | Used Amount of Ln₂O₃ (kg) | |
|---|---|---|---|---|
| | 1st Kind | 2nd Kind | 1st Kind | 2nd Kind |
| Example 36 | Sm | - | 46.3 | - |
| Example 37 | Gd | - | 48.2 | - |
| Example 38 | Dy | - | 49.6 | - |
| Example 39 | Er | - | 50.8 | - |
| Example 40 | Yb | - | 52.4 | - |
| Example 41 | Y | Yb | 27.0 | 5.24 |

### Evaluation:

The oxygen content (mass%) of the particles of the slurries for thermal spraying obtained in Examples and Comparative Examples was measured by the method described supra. Each of the slurries were dried in a forced exhaustion type hot air dryer free from explosion hazard at 110°C for 12 hours to remove the dispersing medium. The residual particles were analyzed by X-ray diffractometry under the conditions described infra to obtain an X-ray diffractogram. The relative intensities of the main peaks of LnF₃, LnOF, and Ln₂O₃ were calculated from the X-ray diffractogram. In Example 41, the total intensity of the maximum peak of YOF and the maximum peak of YbOF was taken as S1, the total intensity of the maximum peak of YF₃ and the maximum peak of YbF₃ was taken as S2, and the total intensity of the maximum peak of Y₂O₃ and the maximum peak of Yb₂O₃ was taken as S0. The particles of each slurry for thermal spraying were also evaluated in terms of average particle size (µm) and BET specific surface area (m²/g) according to the respective methods described infra. A thermal spray coating was formed using each of the slurries of Examples and Comparative Examples. The surface roughness of the resulting coating was measured. The number of particles generated from the thermal spray coating was measured by the method below. The results of evaluation are shown in Table 3.

### (1) X-ray diffractometry

Apparatus: Ultima IV (from Rigaku Corp.)
Ray source: radiation
Tube voltage: 40 kV
Tube current: 40 mA
Scan rate: 2°/min
Step: 0.02°
Scan range: 2θ = 20° to 40°

### (2) Average particle size

In a 100 ml glass beaker was put the slurry for thermal spraying in an amount corresponding to about 0.4 g of the solid matter, and the same dispersing medium as used in the slurry for thermal spraying was added thereto to make a total volume of 100 ml. The beaker and the contents were set on an ultrasonic homogenizer US-300T (output: 300 W) from Nihon Seiki Kaisha Ltd. and subjected to ultrasonication for 5 minutes to prepare a slurry for analysis. The slurry for analysis was dropped into the chamber of the sample circulator of Microtrac HRA from Nikkiso until the instrument judged the concentration to be adequate, and the D50 was determined. When the thus determined D50 was equal to or greater than 0.2 µm, the D50 value was taken as the average particle size (µm) of the particles. When the D50 was smaller than 0.2 µm, the slurry for analysis was 10-fold diluted with the same dispersing medium as used in the slurry for thermal spraying, and the diluted sample was put in the cell of Nanotrac Wave-Ex150 from Nikkiso to determine D50, which was taken as the average particle size (µm) of the particles.

### (3) BET specific surface area

The slurry for thermal spraying was dried in a forced exhaustion type hot air dryer free from explosion hazard at 110°C for 12 hours to remove the dispersing medium. The BET specific surface area of the residual particles was determined using an automatic surface area analyzer Macsorb model 1201 from Mountech Co., Ltd. according to the one point method for BET method. A nitrogen-helium mixed gas (N₂: 30 vol%) was used as an adsorbate.

### (4) Surface roughness of thermal spray coating

A 100 mm square aluminum alloy plate was prepared as a substrate. The slurry for thermal spray was applied onto the substrate by plasma spraying using a suspension feeder Axial III from Northwest Mettech Corp. and a plasma spray gun M650 from Northwest Mettech. The plasma spraying was carried out to form a thermal spray coating having a thickness of about 100 µm under the following conditions: argon gas flow rate, 81 L/min; nitrogen gas flow rate, 81 L/min; hydrogen gas flow rate, 18 L/min; output power, 33 kW; gun-to-substrate distance, 75 mm; and slurry feed rate, 20 g/min. The arithmetic average roughness Ra and maximum height roughness Rz (both specified by JIS B0601:2001) of the surface of the resulting thermal spray coating were measured using a stylus profilometer (specified by JIS B0651:2001).

### (5) Number of particles

A thermal spray coating formed on a 100 mm square aluminum alloy plate by plasma spraying was plasma etched in a chamber in which a 3 inch silicon wafer was placed beforehand. Of the particles having scattered and adhered to the surface of the silicon wafer, those having a particle size of 0.2 µm or greater were counted using a magnifier. The plasma etching was carried out using F-based plasma under the following conditions.
Atmospheric gas: CHF₃:Ar:O₂ = 80:160:100 (mL/min)
High frequency power: 1300 W
Pressure: 4 Pa
Temperature: 60°C
Etching time: 50 hours

Furthermore, the same test was repeated, except for replacing CHF₃ of the atmospheric gas to HCl to generate a Cl-based plasma.

**Table 3**

| | Ln | Particles in Slurry | | | | | | | | Slurry | | Surface Roughness of Coating (µm) | | Number of Particles | |
|---|---|---|---|---|---|---|---|---|---|---|---|---|---|---|---|
| | | X-ray Diffraction Intensity | | | | | Oxygen Content (mass%) | Average Particle Size (µm) | BET Specific Surface Area (m²/g) | Particles Concentration (mass%) | Dispersing Medium | | | | |
| | | LnF₃ (S2) | LnOF (S1) | Ln₂O₃ (S0) | S0/S1 | S1/S2 | | | | | | Ra | Rz | F-based Plasma | Cl-based Plasma |
| Ex. 1 | | 100 | 1 | 0 | 0 | 0.01 | 0.3 | 1.1 | 6.8 | | | 3.7 | 35 | 24 | 19 |
| Ex. 2 | | 100 | 2 | 0 | 0 | 0.02 | 0.4 | 1.1 | 5.5 | | | 3.3 | 31 | 19 | 15 |
| Ex. 3 | | 100 | 4 | 0 | 0 | 0.04 | 0.5 | 1.0 | 4.4 | | | 2.5 | 27 | 9 | 9 |
| Ex. 4 | | 100 | 6 | 0 | 0 | 0.06 | 0.7 | 1.0 | 3.5 | | | 2.3 | 26 | 5 | 2 |
| Ex. 5 | | 100 | 10 | 0 | 0 | 0.10 | 1.2 | 1.0 | 2.5 | | | 2.1 | 24 | 4 | 2 |
| Ex. 6 | Y | 100 | 27 | 0 | 0 | 0.27 | 2.8 | 0.97 | 1.3 | | | 2.2 | 22 | 3 | 3 |
| Ex. 7 | | 100 | 34 | 0 | 0 | 0.34 | 3.3 | 0.99 | 0.98 | | | 2.4 | 20 | 6 | 5 |
| Ex. 8 | | 100 | 57 | 0 | 0 | 0.57 | 4.4 | 0.98 | 0.90 | | | 2.5 | 22 | 10 | 5 |
| Ex. 9 | | 35 | 100 | 0 | 0 | 2.86 | 9.2 | 0.98 | 0.84 | | | 2.7 | 23 | 12 | 7 |
| Ex. 10 | | 2 | 100 | 1 | 0.01 | 50.00 | 12.6 | 0.97 | 0.76 | | | 2.6 | 25 | 13 | 10 |
| Ex. 11 | | 0 | 100 | 3 | 0.03 | - | 13.0 | 0.95 | 0.42 | | | 2.8 | 26 | 18 | 18 |
| Comp. Ex. 1 | | 100 | 0 | 0 | - | 0 | 0.1 | 0.97 | 8.5 | 10 | ethanol | 13 | 95 | 94 | 91 |
| Comp. Ex. 2 | Y₂O₃ | 0 | 0 | 100 | - | - | 20 | 0.96 | 3.5 | | | 4.6 | 45 | 30 | >100 |
| Ex. 12 | | | | | | | 12.5 | 9.9 | 0.48 | | | 3.5 | 32 | 21 | 18 |
| Ex. 13 | | | | | | | 12.4 | 5.0 | 0.57 | | | 3.2 | 30 | 20 | 16 |
| Ex. 14 | | | | | | | 12.4 | 1.9 | 0.65 | | | 2.9 | 26 | 18 | 15 |
| Ex. 15 | | | | | | | 12.6 | 0.50 | 2.6 | | | 2.4 | 22 | 15 | 14 |
| Ex. 16 | Y | 2 | 100 | 1 | 0.01 | 50.00 | 12.5 | 0.18 | 6.4 | | | 2,2 | 21 | 11 | 12 |
| Ex. 17 | | | | | | | 12.7 | 0.10 | 18.6 | | | 2.1 | 21 | 8 | 8 |
| Ex. 18 | | | | | | | 12.7 | 0.05 | 29.7 | | | 2.0 | 19 | 5 | 4 |
| Ex. 19 | | | | | | | 12.8 | 0.02 | 47.3 | | | 1.8 | 19 | 3 | 3 |
| Ex. 20 | | | | | | | 12.7 | 0.01 | 97.0 | | | 1.8 | 17 | 2 | 2 |
| Comp. Ex. 3 | | | | | | | 12.4 | 12.8 | 0.33 | 10 | ethanol | 4.8 | 49 | 39 | 28 |
| Ex. 21 | | | | | | | 12.5 | 0.95 | 0.78 | | methanol | 2.7 | 25 | 12 | 11 |
| Ex. 22 | | | | | | | 12.6 | 0.98 | 0.74 | | IPA | 2.5 | 25 | 11 | 12 |
| Ex. 23 Ex. 24 | | | | | | | 12.7 | 0.94 | 0.83 | | THF | 2.8 | 26 | 13 | 13 |
| | | | | | | | 12.5 | 0.96 | 0.77 | | DMF | 3.0 | 28 | 14 | 13 |
| Ex. 25 | | | | | | | 12.5 | 0.93 | 0.85 | | DMSO | 2.8 | 27 | 12 | 12 |
| Ex. 26 | | | | | | | 12.6 | 1.1 | 0.72 | | ethanol+ water | 3.3 | 31 | 17 | 18 |
| Ex. 27 | Y | 2 | 100 | 1 | 0.01 | 50.00 | 12.6 | 1.3 | 0.69 | | methanol+ water | 3.5 | 30 | 17 | 16 |
| Ex. 28 | | | | | | | 12.7 | 1.1 | 0.73 | | IPA+water | 3.2 | 29 | 18 | 15 |
| Ex. 29 | | | | | | | 12.8 | 2.8 | 0.73 | | water | 4.7 | 46 | 37 | 25 |
| Ex. 30 | | | | | | | 12.6 | 0.93 | 0.87 | 1 | | 2.3 | 21 | 12 | 10 |
| Ex. 31 | | | | | | | 12.5 | 0.95 | 0.82 | 5 | | 2.5 | 22 | 12 | 11 |
| Ex. 32 | | | | | | | 12.7 | 0.97 | 0.76 | 20 | | 2.8 | 26 | 15 | 14 |
| Ex. 33 | | | | | | | 12.5 | 0.97 | 0.73 | 30 | | 3.1 | 27 | 17 | 16 |
| Ex. 34 | | | | | | | 12.4 | 0.98 | 0.75 | 50 | | 3.3 | 29 | 18 | 16 |
| Ex. 35 | | | | | | | 12.5 | 0.99 | 0.72 | 55 | | 3.7 | 33 | 22 | 20 |
| Ex. 36 | Sm | 100 | 5 | 0 | 0 | 0.05 | 0.4 | 1.1 | 1.1 | 10 | ethanol | 2.8 | 29 | 16 | 14 |
| Ex. 37 | Gd | 100 | 6 | 0 | 0 | 0.06 | 0.5 | 1.0 | 1.2 | | | 2.5 | 26 | 11 | 12 |
| Ex. 38 | Dy | 100 | 6 | 0 | 0 | 0.06 | 0.5 | 1.2 | 1.0 | | | 2.6 | 25 | 12 | 10 |
| Ex. 39 | Er | 100 | 6 | 0 | 0 | 0.06 | 0.5 | 1.1 | 0.88 | | | 2.4 | 25 | 10 | 10 |
| Ex. 40 | Yb | 100 | 7 | 0 | 0 | 0.07 | 0.5 | 1.0 | 0.93 | | | 2.4 | 23 | 10 | 8 |
| Ex. 41 | Y+Yb | 100 | 7 | 0 | 0 | 0.07 | 0.7 | 0.97 | 0.84 | | | 2.6 | 26 | 11 | 9 |

As is apparent from the results in Table 3 that the thermal spray coating formed of each of the slurries for thermal spraying of Examples has small surface roughness and generates a small number of particles in plasma etching using whichever of F-based plasma and Cl-based plasma. That is, the slurries for thermal spraying of Examples prove excellent in anti-corrosion properties against not only F-based plasma but also Cl-based plasma. In contrast, the thermal spray coating formed of the slurry for thermal spraying of Comparative Example 1, which contains particles composed of LnF₃ and free from LnOF, has very large surface roughness and generates a greatly increased number of particles during plasma etching. The thermal spray coating formed of the slurry of Comparative Example 2, which uses particles of Ln₂O₃, generates an increased number of particles particularly during plasma etching using Cl-based plasma. The thermal spray coating formed of the slurry of Comparative Example 3 containing particles having an average particle size exceeding 10 µm also has very large surface roughness and generates an increased number of particles during plasma etching.

## Claims

1. A slurry for thermal spraying comprising particles containing a rare earth element oxyfluoride (LnOF) and a dispersing medium, the particles having an average particle size of 0.01 µm to 10 µm.

2. The slurry for thermal spraying according to claim 1, wherein the particles further contain a rare earth fluoride (LnF₃) in addition to the rare earth element oxyfluoride (LnOF).

3. The slurry for thermal spraying according to claim 1 or 2, wherein, upon analyzing the particles by X-ray diffractometry using or CuKα1 radiation, a ratio of the maximum peak intensity (S0) to the maximum peak intensity (S1), S0/S1, is 0.10 or less, wherein
the maximum peak intensity (S0) is a maximum peak intensity of a rare earth oxide (Ln₂O₃) observed in a range of 2θ angles of from 20° to 40°, and the maximum peak intensity (S1) is a maximum peak intensity of the rare earth oxyfluoride (LnOF) observed in a range of 2θ angles of from 20° to 40°.

4. The slurry for thermal spraying according to any one of claims 1 to 3, wherein the dispersing medium is an organic solvent having a water solubility of 5 mass% or more or a mixture of the organic solvent and water.

5. The slurry for thermal spraying according to claim 4, wherein the organic solvent having a water solubility of 5 mass% or more is an alcohol.

6. The slurry for thermal spraying according to any one of claims 1 to 5, wherein the particles have an oxygen content of 0.3 mass% to 14 mass%.

7. The slurry for thermal spraying according to any one of claims 1 to 6, wherein the rare earth element is at least one member selected from yttrium (Y), samarium (Sm), gadolinium (Gd), dysprosium (Dy), erbium (Er), and ytterbium (Yb).

8. The slurry for thermal spraying according to claim 7, wherein the rare earth element is yttrium (Y).

9. A thermal spray coating formed by thermally spraying the slurry for thermal spraying according to any one of claims 1 to 8.
